Europäisches Patentamt

European Patent Office

Office européen des brevets

(11) Numéro de publication: **0 036 794**
A1

# (12) DEMANDE DE BREVET EUROPEEN

(21) Numéro de dépôt: 81400327.3

(22) Date de dépôt: 03.03.81

(51) Int. Cl.³: **G 01 S 15/89**, G 01 S 7/62,
G 06 G 7/195, G 10 K 11/36,
G 03 H 3/00

(30) Priorité: 21.03.80 FR 8006404

(43) Date de publication de la demande: 30.09.81
Bulletin 81/39

(84) Etats contractants désignés: BE DE GB IT NL SE

(71) Demandeur: THOMSON-CSF, 173, Boulevard Haussmann, F-75360 Paris Cedex 08 (FR)

(72) Inventeur: Tournois, Pierre, Thomson-CSF SCPI 173, bld Haussmann, F-75360 Paris Cedex 08 (FR)

(74) Mandataire: Wang, Pierre et al, "THOMSON-CSF" - SCPI 173, bld. Haussmann, F-75360 Paris Cedex 08 (FR)

(54) Système d'imagerie acoustique.

(57) Système d'imagerie acoustique permettant d'obtenir des images en deux dimensions.

Le système comprend une antenne formée par M transducteurs émetteurs $E_1$, $E_2$, ... $E_M$, fournissant des signaux codés séparables de même fréquence et une antenne de réception ayant au moins un alignement d'hydrophones $H_1$, $H_2$, ... $H_N$. Les signaux tels que $h_i$ reçus chacun des hydrophones sont appliqués à des circuits de traitement tel que $D_{ik}$, fournissant des signaux $x_{ik}$ et $y_{ik}$ qui sont multiplexés dans les circuits MX et MY dans un ordre déterminé mis sur porteuse et appliqués à un dispositif analogique de transformée de Fourier par filtres dispersifs à ondes acoustiques. Après détection le système fournit une ligne d'images.

Application à la visualisation du fond de la mer pour la détection de mines.

1

0036794

SYSTEME D'IMAGERIE ACOUSTIQUE

Le système selon l'invention est un système d'imagerie acoustique permettant d'obtenir des images en deux dimensions. En particulier un tel système peut être utilisé pour visualiser des objets sous-marins.

L'imagerie acoustique trouve des applications importantes dans les domaines de la médecine, du test non destructif et également dans le domaine de l'acoustique sous-marine. Généralement ces systèmes d'imagerie émettent de l'énergie acoustique sous forme d'ondes ultrasonores qui insonifie l'espace environnant, cette énergie est renvoyée par réflexion vers des moyens de réception fournissant après divers traitements une image similaire en apparence à une image optique.

Il est connu d'utiliser comme moyens de réception une antenne formée de transducteurs fournissant des signaux électriques, ces signaux étant traités pour obtenir un signal représentatif de l'énergie acoustique provenant d'une direction, ce signal étant ensuite détecté avant d'être transmis vers un dispositif de visualisation.

Il est également connu de traiter les signaux provenant des transducteurs espacés périodiquement d'une antenne linéaire en réalisant la transformée de Fourier d'un signal formé successivement des signaux de tous les transducteurs pris dans un intervalle de temps très petit devant l'inverse de la bande passante de l'appareil. Cette méthode de traitement n'est cependant possible que si la bande de fréquences du signal émis est faible relativement à la porteuse haute fréquence.

Enfin il est connu de réaliser la transformée de Fourier d'un signal analogique au moyen de filtres dispersifs à ondes élastiques, un tel dispositif étant connu sous l'appelation anglo-saxonne de "chirp transform". On trouvera la description de ce type d'analyseur de spectre dans un article de C. Lardat au Colloque International sur le Radar - Décembre 78 p. 303-316.

Le système d'imagerie proposé comporte en particulier une antenne de réception plane formée de transducteurs espacés périodiquement dans lequel le traitement des signaux issus des transducteurs est réalisé en effectuant la transformée de Fourier au moyen de filtres dispersifs à ondes élastiques de surface ou de volume.

Dans tous les systèmes d'imagerie la résolution spatiale, c'est-a-dire la distance pour laquelle deux points situés dans le plan de l'image sont séparables, est déterminée par la dimension de l'antenne de réception comptée en longueurs d'onde.

Une technique largement utilisée dans le domaine radar consiste à synthétiser une dimension d'antenne plus grande en utilisant le déplacement de l'émetteur et de l'antenne de réception par rapport à l'objet.

Une autre technique décrite dans le brevet américain 4.119.940 de Keating consiste à utiliser plusieurs émetteurs séparés dans l'espace et dont les positions sont connues relativement à l'antenne de réception, chaque émetteur fournissant un signal codé de manière à pouvoir ensuite être séparé au niveau de chaque transducteur de l'antenne de réception. Les signaux sont ensuite convertis en échantillons numériques pour être traités par un calculateur qui reconstruit l'image en réalisant successivement les opérations de focalisation et de transformée de Fourier. Ce système, qui utilise une technique d'holographie acoustique, présente l'inconvénient de limiter inférieurement le temps nécessaire à l'obtention d'une image du fait du temps pris par les calculs mis en oeuvre dans le calculateur, ceci même en utilisant les meilleurs algorithmes de la transformée de Fourier rapide appelée F.F.T, alors que la visualisation d'objets mobiles se déplaçant rapidement exige que ce temps soit réduit pour obtenir des images nettes.

Le système selon l'invention permet d'obtenir une image de mêmes dimensions dans un temps plus court par l'utilisation de dispositifs analogiques.

En acoustique sous-marine, il est utilisé depuis longtemps des appareils sonar d'imagerie des fonds marins de type "balayage latéral" ou "side-scan", selon l'appelation anglo-saxonne, ou "frontal" comportant une antenne de réception et une antenne d'émission et dont la destination est de fournir une image du fond de la mer afin de détecter et d'identifier les objets s'y trouvant (mines par exemple). Dans ces systèmes les signaux provenant de l'antenne de réception sont traités spatialement pour obtenir des faisceaux d'incidence oblique par rapport au fond. L'image fournie à chaque instant est formée de lignes constituées de "points" d'image correspondant aux directions des faisceaux formés, chaque ligne correspondant à une distance.

Pour améliorer la résolution en distance le signal acoustique est émis avec une bande B et une ligne image doit être obtenue dans un intervalle de temps inférieur ou égal à l'inverse de cette bande, d'où l'intérêt d'utiliser des technologies rapides. Pour cela la formation des faisceaux est, suivant l'art antérieur, effectuée de manière analogique en utilisant des lignes à retard à prises multiples, placées derrière chaque transducteur de l'antenne de réception et un ensemble de sommateurs ; le signal correspondant à un faisceau est obtenu en sortie de chaque sommateur. Compte-tenu de la résolution, plusieurs dizaines de faisceaux sont formés et le volume de circuits électroniques est très important.

Le système selon l'invention, appliqué aux appareils de type sonar "side-scan" ou "frontal" remédie à cet inconvénient et permet l'augmentation de la résolution, c'est-à-dire le nombre de faisceaux formés, sans augmenter la dimension de l'antenne, et de plus la vitesse d'obtention des lignes-image n'est pas diminuée pour un volume de circuits grandement réduit.

Brièvement, c'est un système d'imagerie acoustique comportant : une antenne d'émission formée par M transducteurs émetteurs où M > 1 ; chacun de ces transducteurs émetteurs étant relié à un circuit électrique d'excitation ; une antenne de réception formée d'au moins un alignement d'hydrophones ; les signaux fournis par chaque hydrophone étant appliqués à M circuits, chacun de ces circuits fournissant les M signaux reçus par cet hydrophone générés par les M émetteurs ; et des moyens permettant de multiplexer séquentiellement dans le temps les signaux reçus par chaque alignement d'hydrophones provenant de chaque émetteur, caractérisé par le fait que le système comporte en outre des moyens pour réaliser de façon analogique la transformée de Fourier de ces signaux multiplexés au moyen de filtres dispersifs à ondes élastiques de surface ou de volume, le signal fourni par le dispositif à transformée de Fourier donnant après détection un signal de ligne d'image.

D'autres caractéristiques et avantages ressortiront de la description donnée à titre d'exemple et illustrée par les figures qui représentent :

- figure 1, le schéma de principe du système de visualisation acoustique suivant l'invention :

- figure 2, le schéma général des circuits de traitement des signaux reçus par les hydrophones suivant l'invention ;

- figure 3, un schéma de réalisation d'un des circuits de traitement ;

- figure 4, un circuit de démodulation complexe ;

- figure 5, un circuit de mise sur porteuse du signal multiplexé ;

- figure 6 et figure 7, les schémas de réalisation d'une transformée de Fourier au moyen de filtres dispersifs ;

- figure 8, une antenne à balayage latéral ;

- figure 9, une antenne émission-réception à deux dimensions ;

- figure 10, un schéma pour le traitement d'une antenne à deux dimensions ;

- figure 11, la mise en série de différents signaux multiplexés pour une antenne à deux dimensions ;

- figure 12, le schéma de traitement des signaux multiplexés pour une antenne à deux dimensions ;

- figure 13, un circuit de décodage par des dispositifs à transfert de charge, suivant l'invention.

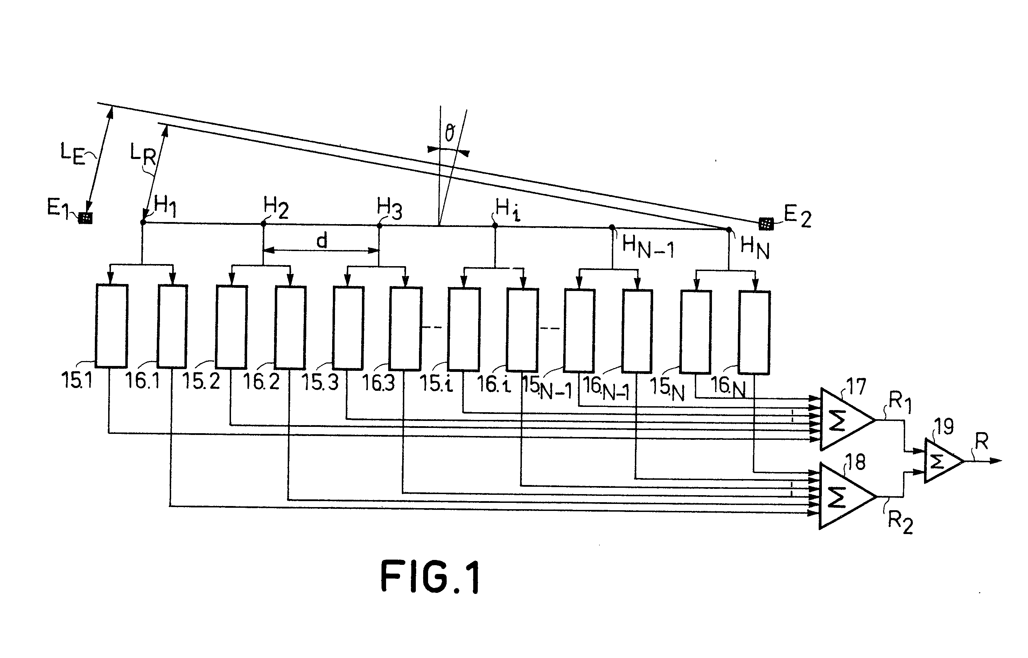

La figure 1 montre l'exemple d'une antenne linéaire à plusieurs émetteurs, suivant l'invention. L'antenne de réception comporte N hydrophones $H_1$, $H_2$,... $H_i$,....$H_N$ équidistants de d et qui reçoivent les échos de toutes les directions des signaux émis par deux émetteurs $E_1$ et $E_2$.

Les deux émetteurs sont situés dans l'alignement de l'antenne et séparés d'une distance égale à $N \times d$ ; avantageusement ils sont placés aux deux extrémités de l'antenne de réception.

Les deux émetteurs $E_1$ et $E_2$ émettent des signaux codés et les signaux reçus par les hydrophones $H_1$, $H_2$,... $H_i$,... $H_N$ sont appliqués à des filtres tels que 15.i et 16.i qui sont adaptés respectivement aux codes des signaux provenant de $E_1$ et $E_2$.

Les signaux obtenus en sortie des filtres 15.1, 15.2...15.i,... 15.N sont additionnés dans un sommateur 17 fournissant un signal $R_1$ et de même les signaux en sortie des filtres 16.1, 16.2,...16.i,... 16.N fournissent après sommation dans le circuit 18 un signal $R_2$. Les deux signaux $R_1$ et $R_2$ sont ensuite additionnés pour fournir un signal résultant R.

En se rapportant à la figure 1, les signaux provenant d'une cible dans une direction faisant l'angle $\theta$ avec la normale à l'antenne, et émis dans cette direction par l'émetteur $E_2$ sont reçus sur chaque hydrophone tel que $H_i$ avec une amplitude $A_i$ et une phase $\varphi_i$ telle que : $\varphi_i = (i-1) \frac{2\pi d}{\lambda} \sin\theta$. $\lambda$ étant la longueur d'onde, l'origine des phases étant prise pour les signaux reçus par l'hydrophone $H_1$.

Le signal $R_2$ peut s'écrire à une constante multiplicative près en utilisant la notation complexe :

$$R_2 = \sum_{i=1}^{N} A_i \, e^{j\varphi_i} \qquad (1)$$

Les signaux émis dans la même direction par l'émetteur $E_1$ sont reçus sur chaque hydrophone tel que $H_i$ avec une amplitude peu différente de $A_i$ et une phase qui est la somme de $\varphi_i$ et d'une phase $\varphi_E$ correspondant au déphasage à l'émission $\varphi_E = \frac{2\pi L}{\lambda} E = \frac{2\pi Nd}{\lambda} \sin\theta$ entre les signaux émis par $E_1$ et $E_2$ dans la direction $\theta$, $L_E$ étant la différence de marche pour les deux émetteurs.

Pour le signal $R_1$ on obtient donc en gardant la même origine de phase que précédemment :

$$R_1 = \sum_{i=1}^{N} A_i \, e^{j(\varphi_i + \varphi_E)} = \sum_{i=N+1}^{2N} A_i \, e^{j\varphi_i} \qquad (2)$$

d'où après sommation par le circuit 19 ; d'après (1) et (2) :

$$R = R_1 + R_2 = \sum_{i=1}^{2N} A_i \, e^{j\varphi_i} \qquad (3)$$

A partir de cette expression (3), le diagramme de rayonnement associé au signal $R$ est tel que :

$$R(\theta) = \sin\left(\frac{2\pi Nd}{\lambda} \sin\theta\right) / \frac{2\pi Nd}{\lambda} \sin\theta \qquad (4)$$

tandis qu'à partir des expressions (1) ou (2), le diagramme de rayonnement associé aux signaux $R_1$ ou $R_2$ est tel que :

$$R_{1,2}(\Theta) \simeq \sin\left(\frac{\pi Nd}{\lambda}\sin\Theta\right) \Big/ \frac{\pi Nd}{\lambda}\sin\Theta \quad (5)$$

La largeur du lobe principal à la puissance moitié $2\,\Theta_o$ donnée par l'expression (4) est deux fois plus faible que celle donnée par l'expression (5). Autrement dit la largeur $2\,\Theta_o$ obtenue avec deux émetteurs est égale à celle qui aurait été obtenue avec un seul émetteur mais avec une antenne deux fois plus longue comportant 2N hydrophones.

Les émetteurs $E_1$ et $E_2$ forment une antenne d'émission et ils peuvent être situés n'importe où à condition que leur position par rapport à l'antenne de réception soit connue.

Par extension un système permettant de diminuer la largeur $2\,\Theta_o$, c'est-à-dire d'augmenter la résolution, sans augmenter les dimensions de l'antenne de réception, comportera une antenne d'émission formée de plusieurs émetteurs et d'une antenne de réception formée d'un réseau d'hydrophones.

Avec une antenne telle que représentée sur la figure 1 qui reçoit une onde plane sinusoïdale, la distribution des pressions reçues à un instant donné par les N hydrophones est une sinusoïde dont la fréquence est fonction de la direction $\Theta$. Cette propriété est utilisée pour former des voies en effectuant une transformée de Fourier du signal résultant du multiplexage des N signaux $h_1, \dots h_N$ dans un intervalle de temps très court vis-à-vis de l'inverse de la bande. On obtient ainsi N signaux représentatifs de l'énergie acoustique correspondant à N directions dans le domaine des fréquences spatiales, telles que $f_s = \frac{d}{\lambda}\sin\Theta$.

En se reportant à la figure 1 on appelle profondeur de l'antenne pour une direction $\Theta$ le temps de propagation correspondant à la distance $L_R$ qui est la différence de marche entre les hydrophones extrêmes, c'est à dire $(\frac{N-1}{c}d)\sin\Theta$, si c est la vitesse des ondes. Si les signaux ont une bande B autour d'une fréquence porteuse $f_o$, cette bande doit être faible vis-à-vis de l'inverse de la profondeur de l'antenne dans la direction $\Theta$ la plus inclinée ; d étant inversement proportionnel à $f_o$ il faut donc que le rapport $B/f_o$ soit faible.

Avec un système comportant une antenne de réception formée de N hydrophones alignés et périodiquement espacés de d, et une antenne d'émission formée de M émetteurs alignés et périodiquement espacés de Nd, on comprendra d'après les enseignements précédents qu'il est possible d'obtenir une image de M x N points en mettant en série bout à bout les M signaux obtenus après multiplexage pour un émetteur des N signaux reçus par les N hydrophones, la bande de fréquences des signaux émis étant faible devant l'inverse de la profondeur de l'antenne dans la direction la plus inclinée, et en effectuant la transformée de Fourier du signal résultant ainsi obtenu.

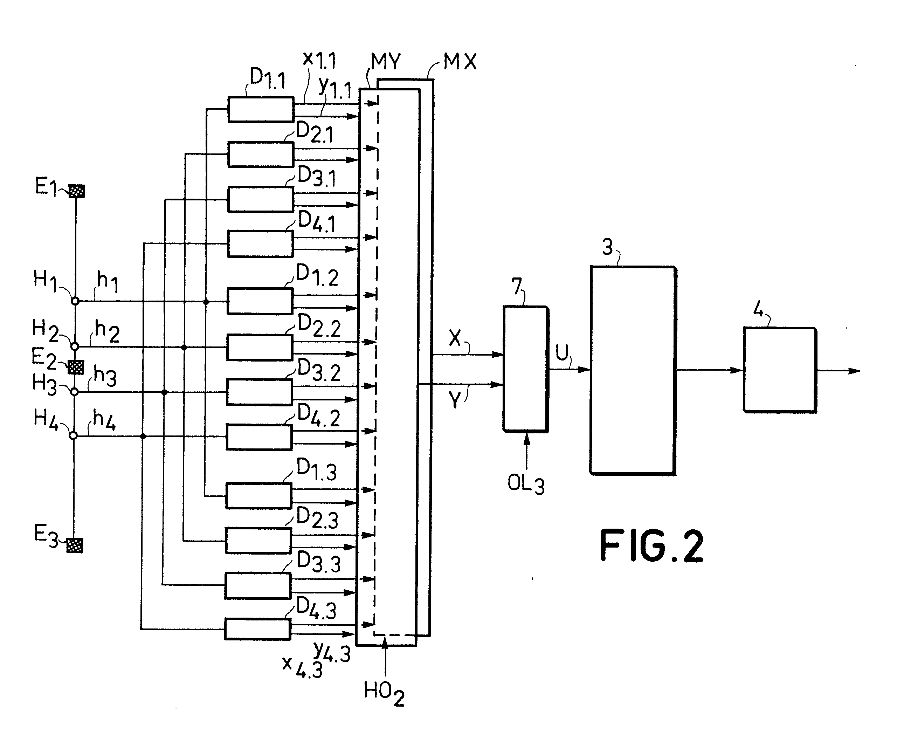

La figure 2 représente un système fournissant une ligne de points image, un point étant représentatif de l'énergie acoustique provenant d'une direction obtenue par un faisceau formé dans cette direction dont la largeur correspond à la résolution de l'antenne. L'antenne de réception est composée de N hydrophones $H_i$ équidistants de la distance d et l'antenne d'émission est composée de M émetteurs équidistants de la distance Nd et placés de préférence suivant l'alignement des transducteurs $H_i$. Sur la figure N = 4 et M = 3.

Les émetteurs $E_1$, $E_2$ et $E_3$ émettent des signaux sous forme d'impulsions de même fréquence centrale $f_o$ et de densités spectrales identiques. Afin de pouvoir être séparés au niveau de chaque hydrophone $H_i$ ces signaux sont codés par émetteur. La fréquence porteuse $f_o$ est par exemple modulée par une séquence de $\omega$ symboles binaires occupant chacun une bande de fréquences B telle que $B \ll f_o$. La durée de chaque signal est égale à T et les valeurs de B et T sont choisies telles que le produit BT soit largement supérieur au nombre M d'émetteurs. Les séquences binaires sont codées orthogonalement. On obtient ainsi en sortie d'un filtre adapté au code un signal présentant un pic de corrélation. On peut utiliser par exemple un code à saut de phase appelé P.S.K. ou Phase Shift Keying dans la littérature anglo-américaine.

Les signaux électriques $h_i$ fournis à un instant par chaque transducteur tel que $H_i$ sont envoyés dans M chaines de traitement telles que $D_{ik}$, avec $k \ll M$, comportant chacune un dispositif corrélateur destiné à séparer les divers signaux correspondant à chacun des émetteurs, ces corrélateurs réalisant le filtrage adapté aux codes de ces émetteurs.

Le schéma d'un exemple de réalisation, d'un circuit de traitement $D_{ik}$

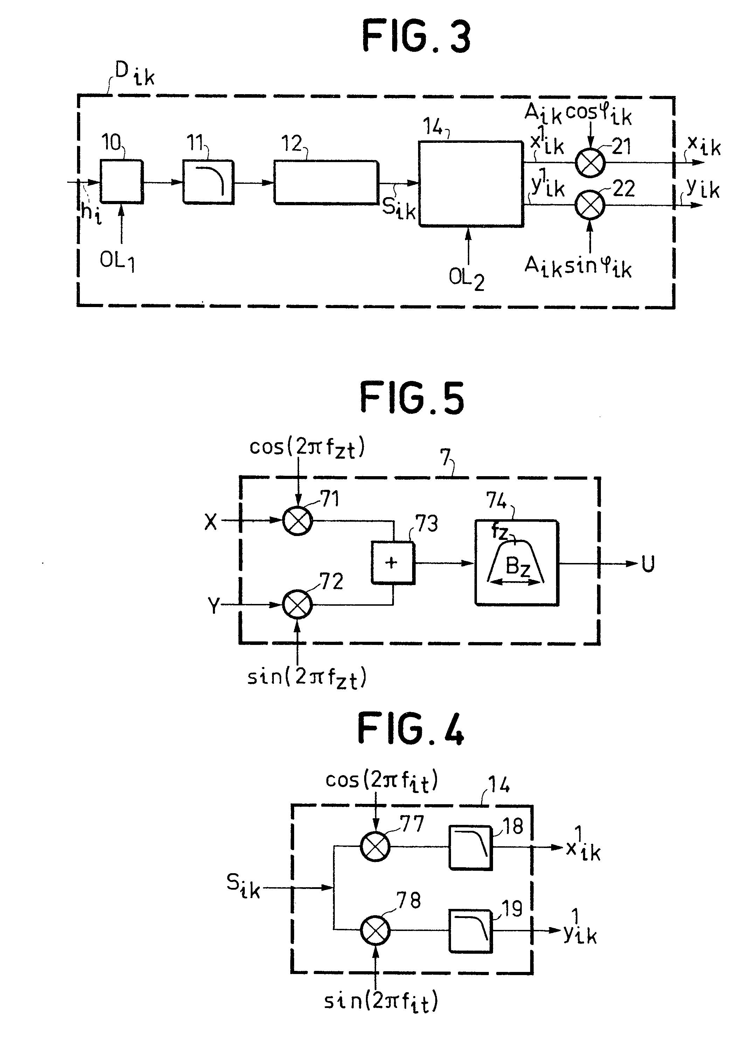

est montré par la figure 3. Le signal $h_i$ reçu par le transducteur $H_i$ est appliqué à un circuit de changement de fréquence 10, qui reçoit par ailleurs le signal fourni par un oscillateur local OL1. Le signal changé en fréquence est filtré par un filtre passe-bas 11 et appliqué à un circuit de corrélation 12 adapté au signal émis par l'émetteur $E_i$.

Dans une réalisation préférentielle le circuit de corrélation tel que 12 est réalisé par un dispositif à transfert de charge appelé CCD dont le fonctionnement est analogue à celui d'un registre d'un décalage. Chaque corrélateur est adapté à un code émis et pour ce code on obtient en sortie un signal présentant un pic de corrélation.

Le signal analogique fourni à chaque CCD est échantillonné dans le temps à la cadence de la période $T_{H01}$ d'un signal d'horloge H01 de fréquence $f_{H01}$. Si le registre à CCD comporte K étages, la valeur de $T_{H01}$ choisie est égale à T/K, T étant la durée de l'impulsion émise. En outre la fréquence $f_i$ du signal analogique fourni doit être telle que $f_i < f_{H01}/2$.

Le signal de corrélation $S_{ik}$ est appliqué à un circuit 14 réalisant l'opération appelée démodulation complexe montré schématiquement par la figure 4. Le signal $S_{ik}$ est multiplié d'une part par $\cos 2\pi f_i t$ et d'autre part par $\sin \pi 2 f_i t$, $f_i$ étant la fréquence porteuse du signal $S_{ik}$. Après filtrage par les filtres passe-bas 18 et 19 on obtient les composantes du signal $x_{ik}^1$ et $y_{ik}^1$. Ces composantes sont multipliées en 21, et en 22 par des valeurs de pondération respectivement $A_{ik} \cos \Psi_{ik}$ et $A_{ik} \sin \Psi_{ik}$ dans les circuits de multiplication fournissant les composantes de signal $x_{ik}$ et $y_{ik}$ (fig.3).

En sortie des chaines de traitement telles que $D_{ik}$ on obtient ainsi M x N signaux complexes $x_{ik}$, $y_{ik}$ (fig.2). Les signaux $x_{ik}$ et $y_{ik}$ sont appliqués respectivement à des circuits de multiplexage MX et MY au rythme d'une horloge $H_{02}$ dont la période $T_{H02}$ est choisie pour être petite par rapport à l'inverse de la bande des signaux.

L'ordre de multiplexage est tel que les signaux X et Y obtenu se suivent dans un ordre tel que :

$$X = x_{11}, x_{21}, \ldots x_{N1}, \ldots x_{1M}, x_{2M}, \ldots x_{NM}.$$

L'ordre est le même pour les signaux Y. Les signaux X et Y sont appliqués à un circuit 7 de mise sur porteuse à une fréquence $f_z$ fournie par l'oscillateur local OL3. Le circuit 7 est montré schématiquement par la figure 5. Les signaux X et Y sont respectivement multipliés par $\cos(2\pi f_z t)$ et $\sin(2\pi f_z t)$ en 71 et 72, et additionnés dans un circuit 73. Finalement le signal obtenu est filtré autour de la nouvelle fréquence porteuse $f_z$ par le filtre 74 de bande $B_z$ fournissant un signal U. Ce signal U est appliqué à un circuit 3 qui effectue de manière analogique et très rapidement la transformée de Fourier à l'aide de filtres dispersifs à ondes élastiques. Après détection par le circuit 4 le signal de sortie obtenu correspond à une ligne de points image.

Suivant l'invention, la valeur de la fréquence $f_z$ de l'oscillateur local OL3 est choisie pour permettre au signal d'être traité ultérieurement dans des filtres dispersifs à ondes élastiques ; elle est de l'ordre de plusieurs dizaines de MHz.

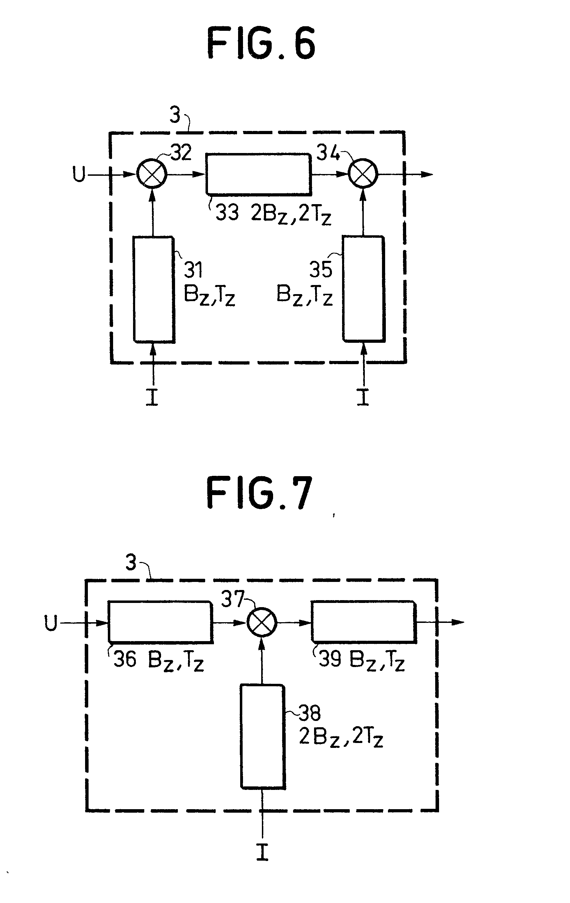

Le signal U fourni par le circuit 7 de fréquence porteuse $f_z$, de durée $T_z = M \times N \times T_{H02}$ et de bande $B_z$, fonction de la fréquence de multiplexage $f_{H02}$ est envoyé dans le circuit transformateur de Fourier 3, utilisant des filtres dispersifs à ondes élastiques et représenté sur les figures 6 et 7 selon deux modes de réalisation.

Le premier mode de réalisation, figure 6, est un montage appelé M-C-M, multiplication-convolution-multiplication, pour lequel les signaux U successifs peuvent être envoyés sans être séparés en temps. Dans ce montage le signal U est prémultiplié dans un circuit 32 par un signal appelé "rampe" qui est modulé linéairement en fréquence dont la bande est $B_z$ et la durée $T_z$. Pour obtenir ce signal une impulsion I très brève est envoyée à l'entrée d'un filtre dispersif 31. En sortie du multiplicateur 32 le signal est envoyé dans un filtre dispersif 33 dont la bande est $2 B_z$ et la durée $2 T_z$. En sortie le signal est post-multiplié en 34 par un signal de rampe identique au précédent généré par le filtre dispersif 35. Si la phase du signal n'est pas utile, cette post-multiplication peut être supprimée et remplacée par une détection effectuée en 4 (figure 2). Avec ce montage il n'est cependant pas possible de pondérer le filtre 33 de sortie pour améliorer l'analyse.

Le deuxième mode de réalisation, figure 7, est un montage appelé C-M-C, convolution-multiplication-convolution, pour lequel les signaux U doivent être envoyés séquentiellement séparés d'un intervalle de temps égal à $T_z$, durée du signal U. En revanche le filtre dispersif de sortie 39 peut être pondéré.

Dans ce montage le signal U est d'abord convolué dans un filtre dispersif 36, de bande $B_z$ et de durée $T_z$, puis multiplié en 37 par un signal de rampe fourni par un filtre dispersif 38 de bande $2B_z$ et de durée $2T_z$. En sortie du multiplicateur 37 le signal est envoyé dans un filtre dispersif 39 identique au filtre 37. Si la phase du signal n'est pas utile, le premier filtre de convolution 36 peut être supprimé, le signal de sortie étant détecté en 4.

La présente invention peut être utilisé avantageusement à des appareils du type Sonar pour obtenir une image du fond de la mer.

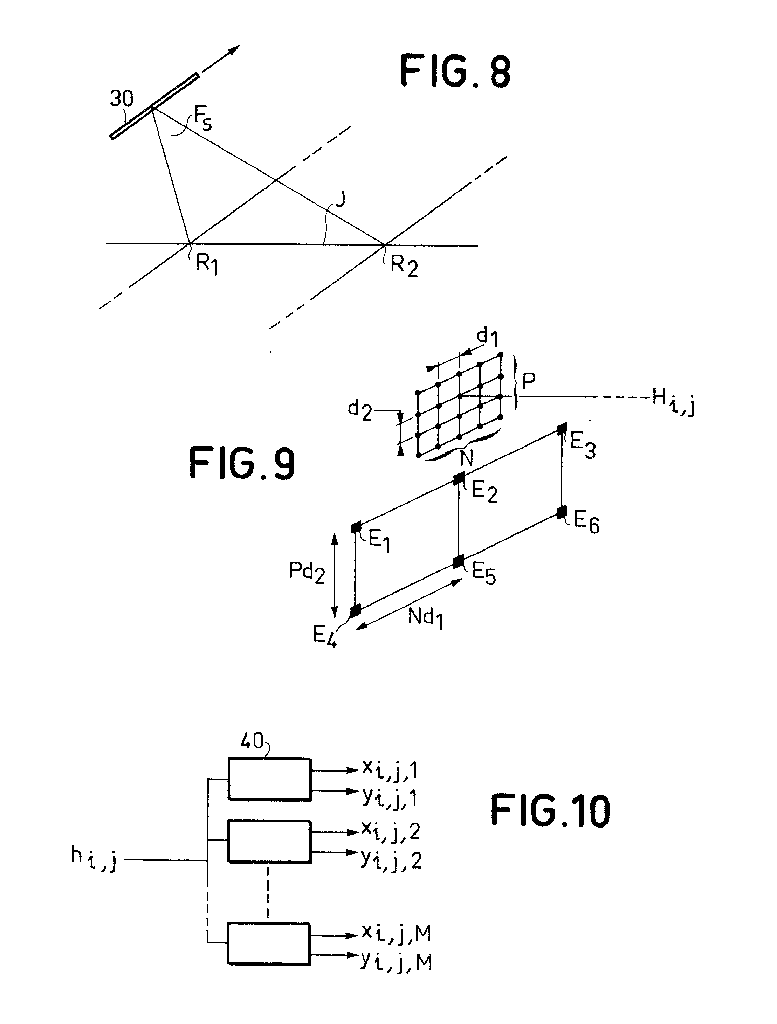

Comme représenté schématiquement sur la figure 8 dans le cas d'un sonar à balayage latéral, un faisceau $F_S$ est formé à partir d'une antenne 30 de manière à éclairer le fond suivant une incidence oblique de sorte que une ligne de points image J est formée dans l'intervalle de temps séparant 2 échos provenant des points $R_1$ et $R_2$, l'image étant formée par l'avancement du véhicule. On peut aussi former plusieurs faisceaux dans la direction du déplacement du véhicule le Sonar est alors du type frontal.

Dans un exemple de réalisation suivant l'invention, le système comporte une antenne d'émission avec 3 émetteurs et une antenne de réception avec 96 hydrophones, les antennes étant disposées comme indiqué sur la figure 2. Les signaux émis sous forme d'impulsions codées dans une bande B autour de la même fréquence centrale $f_o$ ont les caractéristiques suivantes :

· $f_o$ = 200 kHz ; B = 6 kHz et T = 22,4ms.

Les valeurs des fréquences des différents oscillateurs et signaux d'horloge sont :

$f_{OL1}$ = 194,3 kHz ; $F_{HO1}$ = 22,85 kHz        ; $f_i = f_{OL2}$ = 5,7 kHz
$f_{HO2}$ = 12 MHz ; $f_z = f_{OL3}$ = 30 MHz.

Chaque corrélateur (12) est un dispositif à CCD composé de 512 étages et compte tenu des valeurs précédentes la bande $B_z$ est égale à 12 MHz et la durée $T_z$ égale à 25  s environ.

Les hydrophones sont espacés de 2 longueurs d'onde, l'encombrement de l'antenne de réception est d'environ 1,5 mètre. La résolution angulaire obtenue est voisine de 0,1° la même que pour une antenne de réception longue de 4,5 mètres.

Grâce aux vitesses de fonctionnement élevées qui sont obtenues avec les filtres dispersifs à ondes élastiques une ligne de 288 points images est obtenu dans un intervalle de temps de l'ordre de 25 µs nettement inférieur à 1/B.

Si l'on avait utilisé une technique numérique comprenant un calculateur dont le temps de calcul de l'opération papillon, dite "butterfly" dans la littérature anglo-américaine, est de 1 µ s, la même ligne de points image aurait été obtenue en 1,2 millisecondes environ, temps supérieur à 1/B rendant cette technique inapplicable dans ce cas précis.

Dans les appareils appliqués à l'imagerie frontale, l'image obtenue est formée de points image, chaque point correspondant à deux directions suivant les axes, horizontal et vertical. Leur fonctionnement est identique à une caméra et nécessite l'utilisation d'antennes en deux dimensions. En se reportant à la figure 9, le système comprend une antenne de réception formée de P lignes équidistantes de N hydrophones équidistants et une antenne d'émission formée de L lignes équidistantes de N hydrophones équidistants. Si la maille rectangulaire formée par 4 transducteurs de réception $H_{i,j}$, $H_{i,j+1}$, $H_{i+1,j}$, et $H_{i+1,j+1}$ a pour dimensions $d_1$ et $d_2$ respectivement entre transducteurs d'une même ligne et entre les lignes, la maille rectangulaire formée par 4 émetteurs a pour dimensions $Nd_1$ et $Pd_2$ respectivement entre émetteurs d'une même ligne et entre les lignes. Le nombre total d'émetteurs est égal à M.

Chaque émetteur fournit comme dans le cas précédent un signal de durée T qui est codé suivant un code orthogonal aux codes des autres émetteurs, ces émissions étant simultanées.

Chaque hydrophone fournit un signal $h_{i,j}$, correspondant au ième transduc teur et à la jième ligne. Ce signal est envoyé dans M chaines de traitement. Chaque chaine comporte un circuit 40 analogue au circuit $D_{ik}$ de la figure 3. En sortie, on obtient les signaux $x_{i,j,k}$ et $y_{i,j,k}$, k variant de 1 à M (fig.10). Ces signaux sont multiplexés pour former les signaux appelés $X_{j,k}$ et $Y_{j,k}$.

$$X_{j,k} = x_{1,j,k}, x_{2,j,k} \cdots x_{N,j,k}$$

Ce sont les signaux reçus par les transducteurs de ligne j en provenance de l'émetteur numéroté k.

On obtient de même un signal multiplexé $Y_{j,k}$ pour les signaux $y_{i,j,k}$.

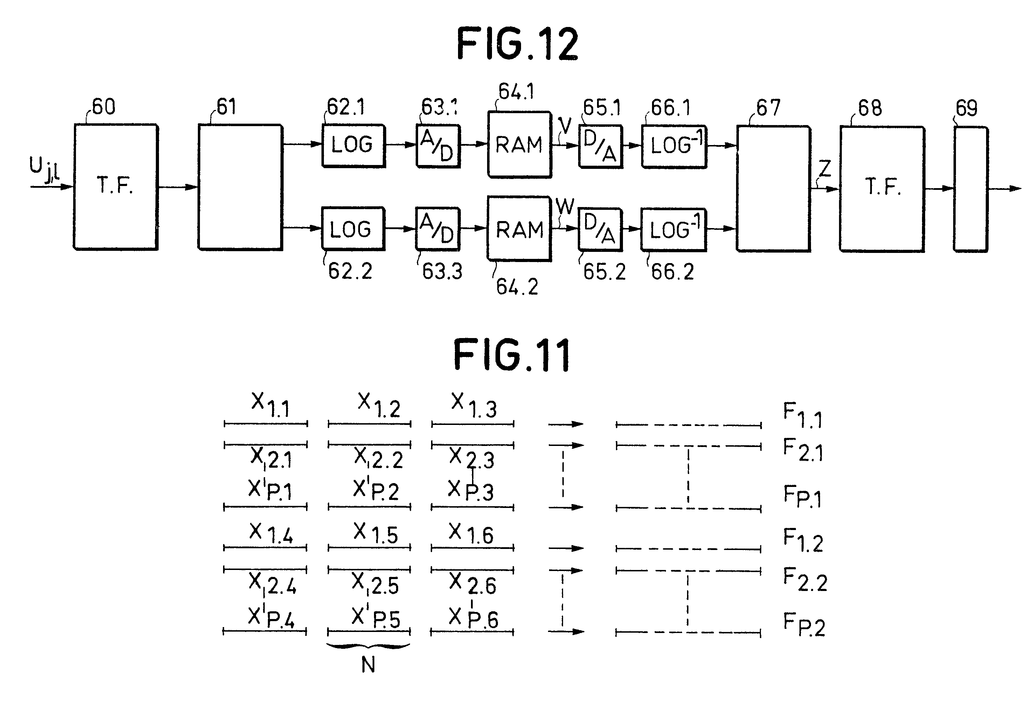

Ces signaux sont regroupés de manière à être traités convenablement pour former une image. La figure 11 explique la façon dont le regroupement est fait pour les signaux $X_{j,k}$ dans le cas où l'antenne d'émission comporte 2 lignes de 3 émetteurs chacune, telle que l'antenne représentée sur la figure 9. Les signaux sont lus séquentiellement et mis en série, bout à bout par ligne d'hydrophones et par ligne d'émetteurs. Ainsi le signal $F_{1,i}$ est formé par les signaux de la première ligne d'hydrophones provenant des émetteurs $E_1$, $E_2$ et $E_3$ et mis en série bout à bout. Chaque signal $X_{j,k}$ ou $Y_{j,k}$ a une durée égale à $NT_{H02}$, si N est le nombre d'hydrophones par ligne et $T_{H02}$ la période du signal d'horloge qui commande l'ensemble des circuits multiplexeurs.

Lorsque les P lignes d'hydrophones ont fourni P signaux $F_{j,1}$ correspondants à la première ligne d'émetteurs, le même regroupement est fait pour la deuxième ligne d'émetteurs $E_4$, $E_5$, $E_6$ fournissant à nouveau P signaux $F_{j,2}$.

Généralement pour un nombre L de lignes d'émetteurs le nombre de signaux $F_j$, fournis est égal à P x L et leur durée est égale à Q x N x $T_{H02}$ pour un nombre Q d'émetteurs par ligne. On obtient de même P x L signaux $G_j$, à partir des signaux $Y_{j,k}$. Chaque paire de signaux $F_j$, et $G_j$, est envoyée dans un modulateur complexe identique à celui représenté sur la figure 4, la fréquence $f_z$ étant adaptée à l'utilisation de filtres dispersifs à ondes élastiques tandis que la bande $B_z$ est égale à la fréquence de multiplexage des signaux $x_{i,j,k}$ et $y_{i,j,k}$. On obtient des signaux $U_j$, qui sont envoyés séquentiellement dans un transformateur de Fourier bidimensionnel à ondes de surface représenté sur la figure 6.

Ce transformateur comporte essentiellement deux transformateurs de Fourier monodimensionnel 60 et 67 de structure identique au transformateur 3 de la figure 7, et d'une mémoire intermédiaire numérique 64, dans laquelle les informations sont rentrées en ligne et sont sorties en colonne. Notons que cette technique est connue de l'art antérieur.

Chaque signal analogique $U_{j,\ell}$ de durée $T_z = Q \times N \times T_{H02}$, de fréquence centrale $f_z$ et de bande $B_z$ est traité dans le premier transformateur de Fourier 60. Le signal est ensuite démodulé avec la fréquence $f_z$ par le circuit 61 identique à celui représenté sur la figure 4. Suivant une réalisation préférentielle de l'invention, les parties appelées réelles et imaginaires obtenues subissent ensuite une compression logarithmique en 62.1 et 62.2 permettant de réduire le nombre de bits de la conversion numérique effectuée en 63.1 et 63.2 sur n bits puis sont stockées dans 2 mémoires vives à accès aléatoire appelées RAM, 64.1 et 64.2. Le stockage est effectué séquentiellement et de telle façon que chaque signal $U_{j,1}$ correspond à une ligne en mémoire, chaque ligne comprenant $N \times Q$ échantillons de n bits.

Lorsque toutes les lignes $L \times P$ ont été stockées en mémoire, les échantillons sont lus séquentiellement colonne par colonne pour fournir des signaux V et W correspondants à chaque colonne de chaque mémoire 64.1 et 64.2. Ces signaux sont convertis en analogique par les convertisseurs 65.1 et 65.2 puis ils subissent une expansion logarithmique, inverse de la compression, par les circuits 66.1 et 66.2. Ils sont ensuite modulés autour de la porteuse $f_z$ par le circuit 67 identique à celui représenté sur la figure 5.

Si les échantillons de chaque colonne sont lus à la cadence d'un signal d'horloge HO3 de période $T_{HO3}$, la durée du signal Z obtenue est égale à $L \times P \times T_{HO3}$. Les $L \times P$ signaux Z sont traités séquentiellement par un deuxième transformateur de Fourier 68 de structure identique au premier.

Après détection par le circuit 69 les signaux obtenus forment l'image en deux dimensions.

Avantageusement les antennes d'émission et de réception sont carrées, c'est-à-dire $L = Q$ et $P = N$. Les durées des signaux $U_{j,\ell}$ et Z sont égales en choisissant $T_{HO3} = T_{HO2}$ et les deux transformateurs de Fourier 60 et 68 sont identiques avec des filtres dispersifs ayant les mêmes temps de retard.

Dans ce système la cadence d'obtention des lignes de points, image n'est pas limitée à l'inverse de la bande du signal émis. Il suffit que cette cadence soit celle du balayage ligne du tube cathodique utilisé.

La présente invention est appliquée en particulier en acoustique sous-marine aux appareils du type caméra qui ont une portée de l'ordre de quelques mètres, la fréquence des signaux étant de l'ordre du Mégahertz.

Dans un exemple de réalisation le système fournit une image de 96 x 96 points avec les caractéristiques suivantes :

antenne d'émission formée de 4 émetteurs ;

antenne de réception formée de 48 x 48 récepteurs espacés de 2 longu eurs d'onde ;

fréquence porteuse des émissions : 2 Mégahertz.

Avantageusement les 4 émetteurs sont placés aux 4 coins de l'antenne de réception de sorte que l'encombrement des antennes est de 7,5 cm x 7,5 cm. La résolution angulaire correspondant à chaque point est égale à $0°,3$ la même que pour une antenne de réception de surface deux fois plus grande et comportant 96 x 96 récepteurs.

Les signaux sont multiplexés à la fréquence $f_{HO2}$ = 4 MHz et les caractéristiques concernant les filtres dispersifs des transformateurs de Fourier sont $B_z$ = 4 MHz, $T_z$ = 25 s et $f_z$ = 10 MHz. La conversion numérique des signaux est par exemple effectuée sur 8 bits.

Avec ce système il est possible de traiter une image dans un temps de l'ordre de 5 millisecondes correspondant à une profondeur de champ de 7,5 mètres.

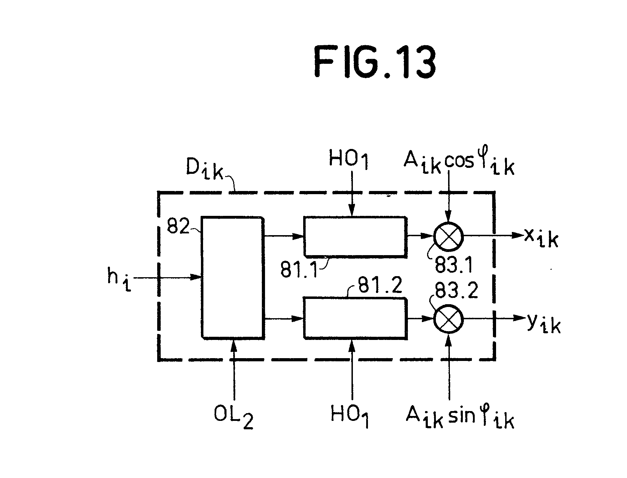

Suivant une variante de l'invention les circuits de traitement tels que $D_{ik}$ fig. 2 et les circuits tels que 40 de la figure 10 sont réalisés comme l'indique la figure 13. Le signal tel que $h_i$ fourni par le transducteur $H_i$ subit d'abord une démodulation complexe dans le circuit 82 par l'oscillateur local OL2. Les composantes de cette démodulation sont appliquées à des circuits CCD qui réalisent le filtrage adapté au code de l'émetteur pour les parties réelle et imaginaire suivis de deux circuits de pondération 83.1 et 83.2. Les signaux $x_{i\,k}$ et $y_{i\,k}$ provenant de l'ensemble des chaines $D_{ik}$ pour chaque émetteur sont ensuite multiplexées séquentiellement dans le temps par deux registres à CCD, non représentés, dont la fréquence de l'horloge H02 est au moins N fois plus grande que la fréquence de l'horloge H01 des registres 81.1 et 81.2, N étant le nombre de signaux multiplexés.

Les signaux $x_{i\,k}$ ou $y_{i\,k}$ sont envoyés en parallèle sur les entrées du registre à CCD et sont délivrés en sortie sous forme d'une série d'échantillons analogiques à la cadence de l'horloge H02. Le circuit de démodulation 82 est identique à celui représenté sur la figure 4 où la fréquence $f_i$ est ici

égale à $f_o$, fréquence centrale des émissions. Notons que la fréquence maximum des signaux en sortie du circuit de démodulation 82 est plus faible que dans la réalisation précédente de sorte que le nombre d'étages de chaque registre à CCD est également plus faible pour la même durée des signaux émis .

Suivant une autre variante de l'invention les mémoires de stockage 64.1 et 64.2 de la figure 12 sont constitués par une série de registres à décalage du type CCD en nombre égal au nombre de lignes. Les signaux obtenus après une première transformée de Fourier acoustique sont envoyés séquentiellement dans chacun des registres dont la fréquence d'horloge est au moins deux fois la fréquence porteuse. Ensuite, le décalage en parallèle case par case, de tous les registres remplis permet d'obtenir les signaux correspondant aux colonnes.

Dans le cas où les antennes d'émission et de réception sont carrées, dans une autre variante de l'invention, le transformateur de Fourier bidimensionnel représenté figure 12 peut n'utiliser qu'un seul transformateur de Fourier monodimensionnel multiplexé dans le temps.

Finalement les exemples donnés sont tels que l'antenne d'émission est composée d'un nombre d'émetteurs inférieur au nombre d'hydrophones de l'antenne de réception, c'est-à-dire $M < N$. Le système fonctionne de la même façon si les fonctions émission et réception sont permutées ce qui revient à avoir $M > N$.

## REVENDICATIONS

1. Système d'imagerie acoustique comportant : une antenne d'émission formée par M transducteurs émetteurs où M 1 ; chacun de ces transducteurs émetteurs étant relié à un circuit électrique d'excitation ; une antenne de réception formée d'au moins un alignement d'hydrophones, les signaux fournis par chaque hydrophone étant appliqués à M circuits, ces circuits fournissant les M signaux reçus par cet hydrophone générés par les M émetteurs ; et des moyens permettant de multiplexer séquentiellement dans le temps les signaux reçus par chaque alignement d'hydrophones provenant de chaque émetteur, caractérisé par le fait que le système comporte en outre des moyens pour réaliser de façon analogique la transformée de Fourier de ces signaux multiplexés au moyen de filtres dispersifs à ondes élastiques de surface ou de volume, le signal fourni par le dispositif à transformée de Fourier donnant après détection un signal de ligne d'image.

2. Système de visualisation acoustique suivant la revendication 1, caractérisé par le fait que chacun des transducteurs émetteurs est excité par un signal codé, que chaque émetteur est excité par un code différent, que tous les codes différents sont orthogonaux entre eux et que tous les signaux codés ont la même fréquence centrale, et que la bande passante de ces signaux est faible par rapport à cette fréquence centrale.

3. Système de visualisation suivant la revendication 1, caractérisé par le fait que N hydrophones $H_1$, $H_2$,...$H_i$,...$H_N$ sont alignés et que les transducteurs émetteurs $E_1$, $E_2$,...$E_k$,...$E_M$ sont alignés parallèlement aux hydrophones, que le signal $h_i$ reçu par l'hydrophone tel que $H_i$ est appliqué à M circuits tels que $D_{i1}$, $D_{i2}$, ... $D_{iM}$, que chacun des circuits tels que $D_{ik}$ fournit les composantes complexes du signal $x_{ik}$ et $y_{ik}$ correspondant au signal reçu par l'hydrophone $H_i$ en provenance de l'émetteur $E_k$, que sous la commande d'une horloge $H_{02}$, les signaux $x_{ik}$ et $y_{ik}$ sont multiplexés dans des circuits (MX et MY) fournissant des signaux X et Y, les séquences étant telles que :

$$X = x_{11}, x_{21}...x_{N1}, x_{12}, x_{22},...x_{N2},...x_{1M}, x_{2M},...x_{NM}$$

et $Y = y_{11}, y_{21}...y_{N1}, y_{12}, y_{22},...y_{N2},...y_{1M}, y_{2M}, ..y_{NM}$, ces signaux X et Y étant appliqués à un circuit de mise sur porteuse (7) recevant le signal d'un oscillateur local OL3 et fournissant un signal U appliqué à un dispositif de transformation de Fourier par filtres dispersifs (3), le signal de transformée de Fourier étant appliqué à un circuit de détection fournissant une ligne d'image.

4. Système de visualisation suivant les revendications 2 et 3, caractérisé par le fait qu'un circuit de traitement tel que $D_{ik}$ recevant le signal $h_i$ de l'hydrophone $H_i$ comporte un circuit de mise sur porteuse (10) recevant le signal d'un oscillateur local OL1, le signal sur porteuse étant filtré par le filtre passe-bas (11), et appliqué à un corrélateur (12) fournissant un signal $S_{ik}$ de corrélation pour le code de l'émetteur $E_k$, ce signal de corrélation étant appliqué à un circuit de démodulation complexe par l'oscillateur local OL2 et fournissant les composantes du signal complexe $x^1_{ik}$ et $y^1_{ik}$, ces signaux étant pondérés respectivement par des fonctions $A_{ik} \cos \varphi_{ik}$ et $A_{ik} \sin \varphi_{ik}$, fournissant les signaux $x_{ik}$ et $y_{ik}$.

5. Système de visualisation suivant la revendication 1, caractérisé par le fait que l'antenne de réception comporte P lignes de N hydrophones tel que $H_{i,j}$ où $1 \leq i \leq N$ et $1 \leq j < P$ et de M transducteurs émetteurs tels que $E_k$ où $1 \leq k \leq M$, les écarts entre les hydrophones adjacents suivant les lignes et les colonnes étant respectivement $d_1$ et $d_2$ et que les émetteurs sont disposés avec des écarts suivant les lignes et les colonnes respectivement égaux à $Nd_1$ et $Ld_2$, que le signal $h_{i,j}$ reçu par l'hydrophone tel que $H_{ij}$ a M circuits de traitement (40) fournissant les couples de composantes complexes pondérés tels que $x_{i,j,1}, y_{i,j,1} ; x_{i,j,2}...x_{i,j,M}, y_{i,j,M}$ ; que ces signaux sont multiplexés pour les deux composantes complexes, une séquence de multiplexage correspondant aux signaux d'une ligne d'hydrophone j successivement, pour les émetteurs d'une même ligne $\ell$, ces séquences de multiplexage étant mise sur porteuse fournissant des signaux tels que $U_{j,\ell}$ qui est appliqué à un dispositif de transformation de Fourier à deux dimensions.

6. Système de visualisation suivant la revendication 5, caractérisé par le fait que les signaux multiplexés tels que $U_{j,\ell}$ subissent une transformation de Fourier dans un dispositif à filtres dispersifs (60), que le signal obtenu subit une démodulation complexe, les composantes du signal obtenues étant après conversion analogique-numérique stockés dans les mémoires à accès aléatoire (64.1, 64.2), que ces mémoires fournissent des signaux suivant des colonnes (V, W) qui après conversion numérique-analogique sont mis sur porteuse et appliqués à un second dispositif à transformation de Fourier (65), le signal transformé étant détecté, fournissant successivement les lignes d'image.

7. Système de visualisation suivant les revendications 3 ou 5, caractérisé par le fait que le dispositif ou les dispositifs à transformation de Fourier comportent deux filtres dispersifs de durée $T_z$ et de bande passante $B_z$ et un troisième filtre dispersif de durée $2T_z$ et de bande passante $2B_z$.

8. Système de visualisation suivant la revendication 7, caractérisé par le fait que le premier (31) et le deuxième filtre (35) dispersifs reçoivent à leur entrée des signaux brefs le signal d'entrée U étant multiplié par le signal de sortie du premier filtre, le signal multiplié étant appliqué au troisième filtre dispersif (33), et que, le signal de sortie de ce filtre est multiplié par le signal de sortie du deuxième filtre dispersif (35) fournissant ainsi le signal de transformée de Fourier.

9. Système de visualisation suivant la revendication 7, caractérisé par le fait, que le premier filtre dispersif (36) reçoit le signal à analyser U que le troisième filtre reçoit un signal bref à son entrée, son signal de sortie étant multiplié par le signal de sortie du premier filtre (36) et que le signal multiplié est appliqué à l'entrée du deuxième filtre dispersif (39) fournissant à sa sortie le signal transformé du signal d'entrée U.

10. Système de visualisation suivant les revendications 3 ou 5, caractérisé par le fait que les circuits de multiplexage sont des dispositifs à transfert de charge.

11. Système de visualisation suivant les revendications 3 ou 5, caractérisé par le fait que le signal d'un hydrophone tel que $h_i$ est appliqué à un circuit de démodulation complexe (82), les deux composantes étant appliquées à des corrélateurs et les deux signaux de corrélation sont pondérés par des circuits de multiplication (83.1, 83.2) fournissant les composantes complexes $x_{ik}$ et $y_{ik}$.

0036794

FIG.1

0036794

FIG.2

# FIG. 3

# FIG. 5

# FIG. 4

## FIG.6

## FIG.7

# FIG. 8

30

$F_s$

J

$R_1$   $R_2$

# FIG. 9

$d_1$

$d_2$

P

$H_{i,j}$

N

$E_3$

$E_2$

$E_1$

$E_6$

$Pd_2$

$E_5$

$E_4$

$Nd_1$

# FIG. 10

40

$x_{i,j,1}$
$y_{i,j,1}$

$x_{i,j,2}$
$y_{i,j,2}$

$h_{i,j}$

$x_{i,j,M}$
$y_{i,j,M}$

# FIG.12

# FIG.11

0036794

# FIG.13

| Catégorie | Citation du document avec indication, en cas de besoin, des parties pertinentes | Revendication concernée | CLASSEMENT DE LA DEMANDE (Int. Cl.³) |
|---|---|---|---|
| | ACOUSTICAL HOLOGRAPHY, vol. 6, 1975, redigé par N. BOOTH, Plenum Press New York, US P.N. KEATING et al.: "Holographic Aperture Synthesis via a Transmitter Array", pages 485-506 <br><br> * Page 486, lignes 1,2,29-31, 35-38; pages 493-505: les parties intitulées "3.Parallel Acquisition of Information" "4. Experiment" * | 1-4 | G 01 S 15/89 <br> 7/62 <br> G 06 G 7/195 <br> G 10 K 11/36 <br> G 03 H 3/00 |
| | PROCEEDINGS OF THE IEEE, vol. 67, no. 4, avril 1979 New York, US P.N. KEATING et al.: "Signal Processing in Acoustic Imaging", pages 496-510 <br><br> * Pages 498 et 499: la partie intitulée "1) Synthetic Aperture Processing": alinéas 1-3 * | 1,2 | **DOMAINES TECHNIQUES RECHERCHES (Int. Cl.³)** <br><br> G 01 S 7/52 <br> 7/62 <br> 15/89 <br> G 01 H 9/00 <br> G 01 N 29/04 <br> G 03 H 3/00 <br> G 06 G 7/195 <br> G 10 K 11/36 <br> H 03 H 9/44 <br> 9/64 |
| D | US - A - 4 119 940 (KEATING et al.) <br><br> * Page de garde: le résumé; colonne 2, lignes 61-66; colonne 5, ligne 63 - colonne 6, ligne 5 * <br><br> & FR - A - 2 368 069 | 1-4 | **CATEGORIE DES DOCUMENTS CITES** <br><br> X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons |
| | PROCEEDINGS OF THE IEEE, vol. 64, no. 5, mai 1976 New York, US J.D. MAINES et al.: "Surface-Acoustic-Wave Devices for Signal Processing Applications", pages | 1 | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 25-06-1981 | OLDROYD |

OEB Form 1503.1   06.78

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | 639-652 | | |
| | * Pages 645, 646: les parties intitulées: "1) Pulse Compression Devices" "2) Programmable Correlators"; page 647: La partie E intitulée "Fourier Transformers", pages 647, 648: la partie A intitulée "Correlation Techniques" * | | |
| | -- | | |
| | ELECTRONICS LETTERS, vol. 13, no. 3, 3 février 1977 HITCHIN, GB JACK et al.: "Two-Dimensional Transform Processor for Sonar Beam-Forming Using CCD and SAW Devices" | 1,5,10 | DOMAINES TECHNIQUES RECHERCHES (Int. Cl. ³) |
| | * En entier * | | |
| | -- | | |
| | IEEE TRANSACTIONS ON ELECTRON DEVICES, vol. ED-25, no. 2, février 1978 New York, US D.F. BARBE et al.: "Signal Processing with Charge-Coupled Devices", pages 108-125 | 1,10 | |
| | * Page 108: alinéas 1 (résumé) et 3; page 110, colonne de droite, ligne 16 - page 111, colonne de gauche, ligne 6; pages 115-117: la partie D intitulée "CCD-SAW Devices" (totalité) et la partie E intitulée "Electrooptical Systems"(lignes 1-12); page 119: la partie B intitulée "Sonar"; page 123, colonne de droite, lignes 16-19 * | | |
| | -- ./. | | |

OEB Form 1503.2 06.78

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| | IEEE 1978 ULTRASONICS SYMPOSIUM PROCEEDINGS New York, US JACK et al.: "Fast Fourier Transform Processor Based on the SAW Chip Transform Algorithm", pages 533-537    * En entier *    -- | 1 | |
| P | IEE PROCEEDINGS, vol. 127, Part F no. 2, avril 1980 Stevenage, GB GAUTIER et al.: "Signal Processing Using Surface-Acoustic-Wave and Digital Components", pages 92-98    * En entier *    -- | 1,5,6 | DOMAINES TECHNIQUES RECHERCHES (Int. Cl. ³) |
| P | IEE PROCEEDINGS, vol. 127, Part F, no. 2, avril 1980 Stevenage, GB DIX et al.: "Applications of CCDs to Sonar Systems", pages 125-131    * En entier *    -- | 1,5,6, 10 | |
| A | IEEE 1977 ULTRASONICS SYMPOSIUM PROCEEDINGS New York, US MANO et al.: "An Experimental Underwater Viewing System Using Acoustical Holography", pages 272-277    * En entier *    --    ./. | 1 | |

Office européen
des brevets

**RAPPORT DE RECHERCHE EUROPEENNE**

0036794

Numéro de la demande

EP 81 40 0327

-4-

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | US - A - 3 771 116 (FARRAH) <br> * En entier * <br><br> ---- | 1 | |

DOMAINES TECHNIQUES RECHERCHES (Int. Cl. 3)